# EUROPÄISCHE PATENTSCHRIFT

(11) **EP 0 867 689 B1**
(45) Veröffentlichungstag und Bekanntmachung des Hinweises auf die Patenterteilung: **19.07.2006**
(21) Anmeldenummer: 98250113.2
(22) Anmeldetag: 27.03.1998
(51) Int. Cl.: G01B 11/30, G01B 11/24

(54) **Mikrofotogrammatische Messeinrichtung**
Microphotogrammatic measuring device
Dispositif de mesure microphotogrammétrique

(30) Priorität: 27.03.1997 DE 19714383
(43) Veröffentlichungstag der Anmeldung: 30.09.1998
(73) Patentinhaber: GF Messtechnik GmbH, 14513 Teltow (DE)
(72) Erfinder: Frankowski, Gottfried, Dr., 10711 Berlin (DE)
(74) Vertreter: Hengelhaupt, Jürgen

(56) Entgegenhaltungen:
- DE-A- 4 416 493
- US-A- 4 842 411
- US-A- 5 307 152
- FURUTANI R ET AL: "3D Profile measurement using a multi-gray scale compared with reference projections" MEASUREMENT,GB,INSTITUTE OF MEASUREMENT AND CONTROL. LONDON, Bd. 20, Nr. 2, 1. Februar 1997 (1997-02-01), Seiten 129-134, XP004084423 ISSN: 0263-2241

## Beschreibung

Die Erfindung betrifft eine rechnergesteuerter, opto-elektronische, mikrofotogrammetrische 3D-Meßeinrichtung zum schnellen und hochgenauen Vermessen von Oberflächenstrukturen nach dem Triangulationsverfahren, insbesondere zum Vermessen von mikroskopischen Oberflächenstrukturen.

Fotogrammetrische Verfahren zur Gewinnung von Informationen und ihre meßtechnische Auswertung auf der Grundlage der Triangulation mit Hilfe trigonometrischer Gleichungen sind bereits bekannt - DE 41 42 564 A1 und DE 195 16 656 A1 - und werden erfolgreich eingesetzt. Klassische Anwendungsfälle sind vor allem die Kartographie (Luftbildmeßtechnik) und die Architektur (Gebäudemeßtechnik).

Aber auch im Automobil- und Flugzeugbau wurden fotogrammetrische Meßverfahren zum hochgenauen Vermessen von Karosserien und Flugzeugkomponenten erfolgreich eingesetzt - DE 40 37 273 A1.

In der optischen Meßtechnik auf der Grundlage von Triangulationsverfahren wird zwischen einer aktiven und passiven Triangulation unterschieden .

Im Gegensatz zu den aktiven fotogrammetrischen Triangulationsmeßverfahren, wie beispielsweise die Laser-Lichtschnitt-Technik oder die Lasertriangulation, bei denen die Veränderung des ausgesendeten Lichtes als Information für die meßtechnische Auswertung dient, wird bei den passiven fotogrammetrischen Triangulationsmeßverfahren nur das Licht, das vom Meßobjekt kommt, in den Aufnahmekameras abgebildet und für die Vermessung eingesetzt. Dabei besteht jedoch die Schwierigkeit, die jeweils zusammengehörenden Meßpunkte eines Meßobjektes in den Bildern der Aufnahmekameras als zusammengehörige Punkte zu identifizieren. Um diese Schwierigkeit zu umgehen, werden definierte Strukturen (Punkte, Kreise, Kreuze oder ähnliches) auf die Oberfläche des zu messenden Objektes aufgetragen bzw. in das Meßvolumen projiziert. Aus dem bekannten Abstand der projizierten oder aufgebrachten geometrischen Figuren können dann die für die Lage der Objektpunkte notwendigen Zuordnungen getroffen werden, wobei die Genauigkeit der Lage der Objektpunkte vor allem von der Genauigkeit abhängt, mit der die innere und äußere Kalibrierung des Triangulationssystems bestimmt werden.

Die Schwierigkeiten, die mit dem Auftragen definierter Strukturen auf das Meßobjekt verbunden sind, waren auch die Ursache dafür, daß fotogrammetrische Meßverfahren auf der Grundlage der Triangulation bisher ausschließlich im Makrobereich eingesetzt worden sind.

Aufgrund der durch die nicht koaxiale Beleuchtung und Beobachtung hervorgerufenen Abschattungen, der Schärfentiefeprobleme durch die flächenhafte codierte Beleuchtung und die durch die Beobachtungsapparatur begrenzte Meßgenauigkeit wird sogar der Einsatz fotogrammetrischer Meßverfahren auf der Grundlage der Triangulation im Mikrobereich ausgeschlossen - DE 44 29 578 A1.

Eine Einrichtung zur fotogrammetrischen Vermessung eines Objektes ist aus DE 43 05 294 A1 bekannt, die zur Erzeugung eines Referenzmusters ein in einem Hologramm gespeichertes virtuelles Referenzmuster verwendet und dieses Hologramm in einem vorgegebenen Abstand_vor dem Meßobjekt anordnet. Die vorgeschlagene Lösung nach DE 43 05 294 A1 gestattet eine fotogrammetrische Vermessung mit hoher Genauigkeit, jedoch ist für jedes Referenzmuster ein gesondertes Hologramm erforderlich, für dessen Erstellung ein relativ hoher Aufwand aufgewendet werden muß.

Zum Prüfen von Oberflächen in Hohlräumen ist ferner eine Vorrichtung gemäß DE 44 16 493 A1 bekannt, die eine in zwei Teile geteilte Sonde enthält. Ein Teil des wenigstens teilweise in den Hohlraum einführbaren Sondenteiles kann eine Drehbewegung gegenüber dem zweiten ruhenden Sondenteil durchführen, das die Sensoranordnung enthält. Mit Hilfe der vorgeschlagenen Einrichtung wird auf die zu prüfende Oberfläche eine optische Meßstrahlung gerichtet und als Kriterium für die Oberflächenbeschaffenheit die von der Oberfläche reflektierte Strahlung ausgewertet. Die Oberflächenprüfvorrichtung dient ausschließlich der Inspektion der Oberflächenbeschaffenheit. Eine Vermessung von Oberflächenstrukturen im Mikrobereich ist mit dieser Einrichtung nicht möglich und auch nicht vorgesehen.

US 4842411 A offenbart eine fotogrammetrische Messeinrichtung zur vermessung von Oberflächenstrukturen mit zwei Aufnahmekameras und mit einem Projektor für strukturierte Beleuchtung

Der Erfindung liegt daher die Aufgabe zugrunde, eine 3D-Meßeinrichtung der eingangs genannten Gattung zu schaffen, die durch die Verbindung einer aktiven und passiven flächenhaften Triangulation eine hochgenaue Vermessung von Oberflächenstrukturen im Mikrometerbereich ermöglicht.

Erfindungsgemäß wird die Aufgabe durch die im Anspruch 1 angegebenen Merkmale gelöst. Weitere vorteilhafte Ausbildungen der Erfindung ergeben sich aus den abhängigen Ansprüchen 2 bis 7.

In an sich bekannter Weise werden mittels zweier Aufnahmekameras, vorzugsweise CCD-Kameras, über ein optisch vergrößertes Abbildungssystem zwei versetzte Bilder der zu untersuchenden Oberfläche aufgenommen und daraus mit Hilfe einer Auswertesoftware fotogrammetrisch ein Höhenbild berechnet. Im Unterschied zur herkömmlichen Fotogrammetrie werden bei der erfindungsgemäßen Lösung zum Auffinden korrespondierender Meßpunkte in den beiden aufgenommenen Bildern zeitlich sequentiell mehrere Streifenmuster auf das Meßobjekt projiziert, wobei beide Aufnahmekameras die Streifenmuster aufnehmen. Die in ihrer Form und Ausbildung unterschiedlichen Streifenmuster werden mit Hilfe eines über den Meß- und Steuerrechner der Meßeinrichtung ansteuerbaren digitalen Projektors für eine strukturierte Beleuchtung erzeugt, dessen Lichtstrukturen über eine Optik, der in den parallelen Strahlengang des optischen Abbildungssystems eingesetzt worden ist, vertikal auf die zu vermessende Oberfläche projiziert werden.

Wie bereits vorstehend dargelegt, wird aus den aufgenommenen Streifenmustern nicht die Höhe der Oberflächenstrukturen berechnet, sondern die korrespondierenden Punkte auf dem Meßobjekt bestimmt. Die Vermessung der Oberflächenstruktur erfolgt auf der Grundlage einer fotogrammetrischen Berechnung mit Hilfe einer Auswertesoftware.

In Abhängigkeit von der gewählten Ausführung der Meßeinrichtung werden die durch den digitalen Projektor, der über einen Vertikalilluminator an das optische Abbildungssystem angeschlossen ist, erzeugten Lichtstrukturen vor der Schaltwalze in den Strahlengang des optischen Abbildungssystems eingekoppelt und durch die Frontlinse des Abbildungssystems auf die Oberfläche des Meßobjektes projiziert.

In Abwandlung dieser Ausführungsvariante werden die Lichtstrukturen vor dem Frontobjektiv in den Strahlungsgang des optischen vergrößernden Abbildungssystems eingekoppelt und, wie vorstehend beschrieben, ebenfalls vertikal auf die zu vermessende Oberfläche eines Meßobjektes projiziert.

Als optisch vergrößerndes Abbildungssystem wird vorzugsweise eine Stereomikroskop eingesetzt, das praktisch die Optik der Aufnahmekameras bildet und über einen Strahlenteiler an die Aufnahmekameras angeschlossen ist.

Je nach Ansteuerung des digitalen Lichtprojektors sind die auf die Oberfläche des Meßobjektes projizierten Lichtstrukturen horizontale oder vertikale Streifen, statistische Intensitätsverteilungen oder allgemein bekannte Fotogrammetriemarken.

Nach einem weiteren Merkmal der Erfindung ist an die Frontlinse des optischen Abbildungssystems eine Winkelbeobachtungsoptik mit einem an seiner Unterseite befindlichen um 45° geneigten Spiegel drehbar angeordnet und die Meßeinrichtung in einem höhenverstellbaren, vorteilhafterweise durch den Meß- und Steuerrechner ansteuerbaren Stativ angeordnet, um die Oberflächenstruktur eines Hohlzylinders vollständig vermessen zu können. Zur lateralen Verschiebung des Meßobjektes ist die erfindungsgemäße Einrichtung vorzugsweise mit einem in X- und Y-Achse verschiebbaren Kreuztisch ausgerüstet.

Durch die Verbindung eines optisch vergrößernden Abbildungssystems mit einem digitalen Lichtprojektor zur Erzeugung einer strukturierten Beleuchtung, die durch die Frontlinse des optischen Abbildungssystems vertikal auf die Oberfläche des Meßobjektes projiziert werden kann, können Oberflächenstrukturen unter einem steilen Winkel von 7,5° erfaßt und beobachtet werden. Auf diese Weise ergibt sich die Möglichkeit, den bisher nur für optische Beobachtungen durch das menschliche Auge genutzten räumlichen Beobachtungseffekt auch für meßtechnische Zwecke zu nutzen.

Durch die Kombination von Fotogrammetrie und Grey-Code-Technik mit Hilfe der erfindungsgemäßen Einrichtungen besteht die Möglichkeit, Mikrostrukturen auf der Oberfläche eines Meßobjektes mit sehr steilem Gradienten meßtechnisch zu erfassen. Die erfindungsgemäße Einrichtung ermöglicht eine geschlossene Grey-Code-Codierung der gesamten Meßoberfläche entsprechend der Pixelanzahl der verwendeten Aufnahmekammera. Daraus resultierend ergibt sich eine zusätzliche hohe Empfindlichkeit für die Bestimmung der Lage der einzelnen Meßpunkte.

Die erfindungsgemäße Lösung gewährleistet eine eindeutige Zuordnung der beiden Kamerabilder durch die Grey-Code-Codierung und mathematisch eindeutig beschreibbaren Punktlagen im linken und rechten Bild des optischen Abbildungssystems, wodurch die Randbedingungen für die Bildsuchalgorithmen erheblich vereinfacht werden.

Durch die Schaffung von Möglichkeiten zur Verwendung unterschiedlicher Vorsatzoptiken und Zwischentuben können die möglichen Zoom-Stufen im optischen Abbildungssystem erheblich erweitert und dadurch eine hohe Variablität der optischen Vergrößerungen erreichen werden.

Auf Grund der mit dem digitalen Lichtprojektor erzeugten kontraststarken Lichtstrukturen mit hoher Randschärfe und der sehr geringen Abschattung der Referenzmarken auf die zu vermessende Oberfläche in Folge ihrer vertikalen Projizierung sind mit der erfindungsgemäßen Einrichtung hochgenaue Meßergebnisse erzielbar und eine Profilhöhenauflösung von kleiner ≥1 µm.

Die erfindungsgemäße Meßeinrichtung gestattet einen praktischen Einsatz in fertigungsnahen Bereichen und ist ausnahmeslos bedienerfreundlich, so daß die Bedienung der Meßeinrichtung durch normal geschultes Bedienungspersonal gegeben ist.

Die Erfindung soll nachstehend an einem Ausführungsbeispiel näher erläutert werden. In den dazugehörigen Zeichnungen zeigen:
- Fig. 1 -: die schematische Darstellung der Einkopplung einer strukturierten Beleuchtung vor der Frontlinse eines optischen Abbildungssystems
- Fig. 2 -: ein Muster, bei dem die strukturierte Beleuchtung hinter der Frontlinse des optischen Abbildungssystems eingekoppelt wird
- Fig. 3 -: den prinzipiellen Aufbau der erfindungsgemäßen Meßeinrichtung zur Vermessung der Oberflächenstruktur einer Zylinderinnenwand

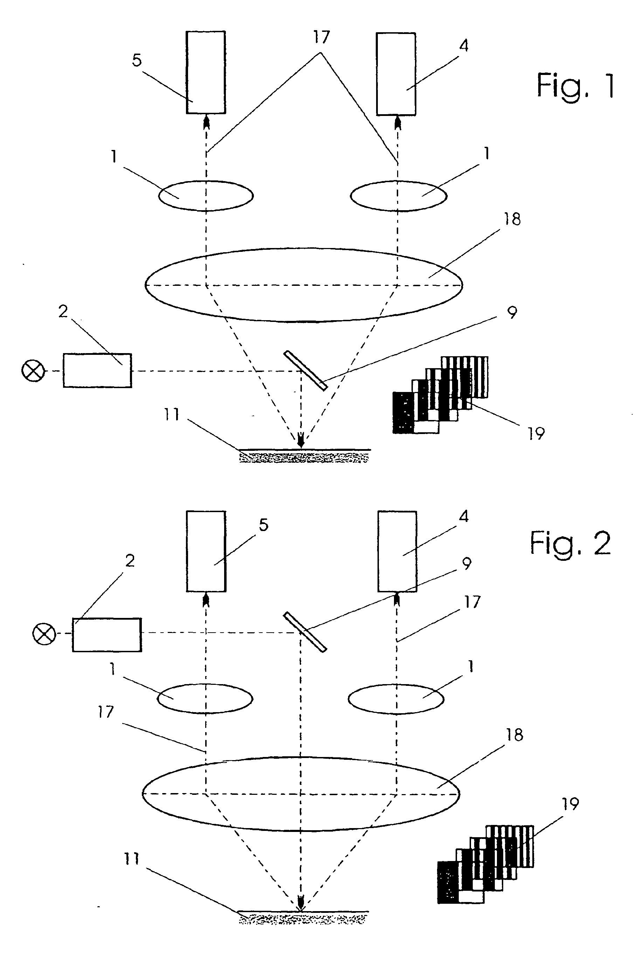

Wie in Fig. 1 und 2 schematisch dargestellt, werden die mit Hilfe eines digitalen, über einen Meß- und Steuerrechner gesteuerten Projektors 2 erzeugten Lichtstrukturen, beispielsweise unterschiedliche Grey-Code-Streifenmuster 19 in den Strahlengang 17 eines optischen Abbildungssystems 1 mit Hilfe der Optik 9 eingekoppelt und zeitlich sequentiell in vertikaler Richtung auf die Oberfläche des Meßobjektes 11 projiziert. Jedes Streifenmuster 19 wird von den Aufnahmekameras 4; 5 aufgenommen, wobei aus der Lage der Streifenmuster die zusammengehörenden Punkte der Oberflächenstruktur des Meßobjektes 11 bestimmt und aus der fotogrammetrischen Berechnung mit Hilfe der Auswertesoftware die Vermessung der Oberflächenstruktur vorgenommen wird. In Abhängigkeit von dem gewählten System werden die mit Hilfe des Projektors 2 erzeugten Lichtstrukturen vor (Fig. 1) oder hinter der Frontlinse 18 (Fig. 2) in den Strahlengang 17 des optisch vergrößernden Abbildungssystems 1 eingekoppelt.

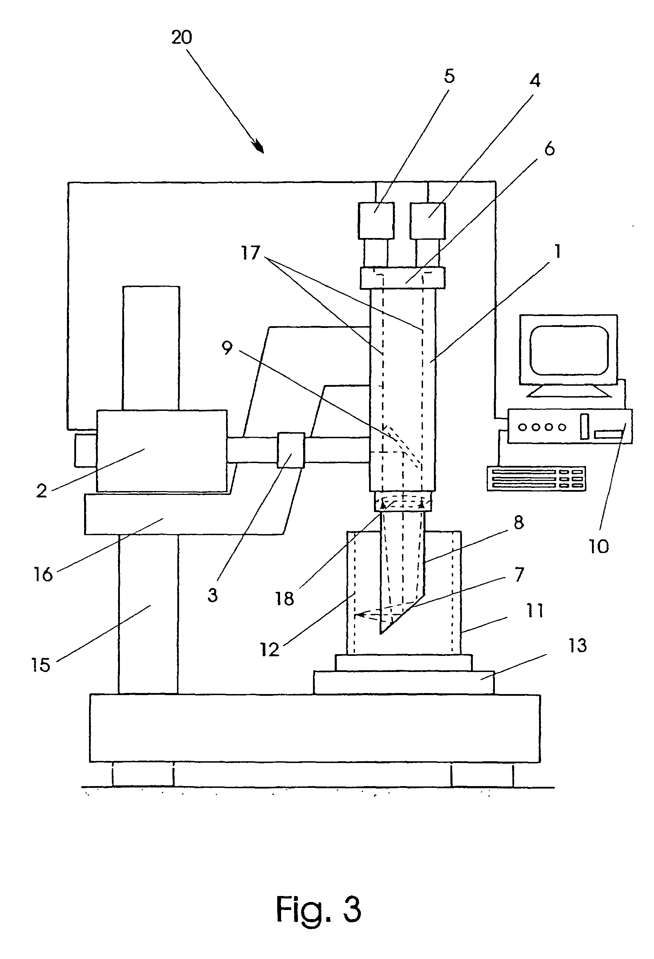

Eine mikrofotogrammetrische Meßeinrichtung 20 nach der Erfindung unter Verwendung eines optisch vergrößernden Abbildungssystems 1 in Form eines Stereomikroskopes mit einem eingekoppelten digitalen Projektor 2 zur Erzeugung einer strukturierten Beleuchtung ist in Fig. 3 am Beispiel einer meßtechnischen Ausführung zur Vermessung der Oberflächenstrukturen einer Zylinderinnenwand 12 gezeigt. In der vorliegenden Ausführung der Meßeinrichtung 20 erfolgt die Einkopplung der Lichtstrukturen in Form von Grey-Codes 19 hinter der Schaltwalze des optischen Abbildungssystems 1 und werden, wie vorstehend beschrieben, vertikal auf die Innenwandfläche 12 des Meßobjektes 11 abgebildet, wobei die Einkopplung der Grey-Code-Strukturen über einen Vertikalilluminator 3 erfolgt. Die zeitlich sequentiell grey-codierten Innenwandflächen 12 des Meßobjektes 11 werden von den rechnergesteuerten Aufnahmekameras 4 und 5 aufgenommen, die zur gleichzeitigen Aufnahme der beiden Stereobilder über einen Strahlenteiler 6, der die beiden Bilder 50/50 in der Lichtintensität teilt, an das optische Abbildungssystem 1 angeschlossen sind.

Die gesamte mikrofotogrammetrische Meßeinrichtung 20 ist in einem Stativ mit einer Meßgerätsäule 15 und einer höhenverstellbaren Traverse 16 angeordnet, das mit einem in X- und Y-Achse verstellbaren Kreuztisch 13 ausgestattet ist.

An die Frontlinse 18 des optischen Abbildungssystems 1 ist eine Winkelbeobachtungsoptik 8 verdrehbar angebracht, an deren Unterseite sich ein um 45° geneigter Spiegel 7 befindet. Über den Spiegel 7 kann die zu untersuchende Innenwandfläche 12 beleuchtet bzw. von den Aufnahmekameras 4: 5 aufgenommen werden.

Durch die Höhenverstellung der Traverse 16 und durch Drehen des Spiegels 7 um 360° kann die gesamte Innenwandfläche 12 des Meßobjektes 11 untersucht und vermessen werden.

Die Höhenverstellung der Traverse 16 erfolgt vorzugsweise über den Meß- und Steuerrechner 10 der Meßeinrichtung 20. Sie kann aber auch von Hand vorgenommen werden.

Für die Mikroprofilvermessung der Struktur der Innenwandfläche 12 des Meßobjektes 11 ist im vorliegenden Ausführungsbeispiel ein Meßfleckdurchmesser von 2 bis 3 mm konzipiert. Damit werden auf der in einer Aufnahme der zu untersuchenden Innenwandfläche 12 zwischen 4 und 16 mm eine Meßpunktanzahl entsprechend der Pixelanzahl der verwendeten CCD-Aufnahmekamera 4; 5 gesetzt. Die Meßzeit pro Aufnahme liegt zwischen 5 und 10 sec und kann gegebenenfalls noch weiter verkürzt werden. Die laterale Auflösung der Meßeinrichtung hängt im wesentlichen von der gewählten Meßfläche der Oberflächenstruktur und vom Integrationsgrad der Aufnahmekameras 4; 5 ab.

Die erreichbare Profilhöhenauflösung wird maßgeblich von der Grey-Code-Auflösung bestimmt und liegt zwischen 1/1000 bis 1/3000 der gewählten Meßstrecke.

### Bezugszeichenaufstellung

- 1: Optisches Abbildungssystem
- 2: Projektor
- 3: Vertikalilluminator
- 4: Aufnahmekamera
- 5: Aufnahmekamera
- 6: Strahlenteiler
- 7: Spiegel
- 8: Winkelbeobachtungsoptik
- 9: Optik
- 10: Meß- und Steuerrechner
- 11: Meßobjekt
- 12: Innenwandfläche
- 13: Kreuztisch
- 14: -
- 15: Meßgerätsäule
- 16: Traverse
- 17: Strahlengang
- 18: Frontlinse
- 19: projizierte Grey-Codes
- 20: Meßeinrichtung

## Patentansprüche

1. Mikrofotogrammetrische 3D-Messeinrichtung zur Vermessung von Oberflächenstrukturen nach dem Triangulationsverfahren, bestehend aus zwei entsprechend dem Messverfahren ortsfest angeordneten Aufnahmekameras (4, 5) und Mitteln (1), mit denen die Oberfläche vergrößert abgebildet und ein Referenzcode auf die Oberfläche projiziert wird, **dadurch gekennzeichnet, dass** in den Strahlengang (17) eines optisch vergrößernden Abbildungssystems (1) ein digitaler Projektor (2) für eine strukturierte Beleuchtung eingekoppelt ist, der durch einen Mess- und Steuerrechner (10) steuerbar ist und dessen erzeugte Lichtstrukturen zeitlich-sequentiell auf die Oberfläche des Messobjektes (11) projizierbar sind.

2. Messeinrichtung nach Anspruch 1, **dadurch gekennzeichnet, dass** der Projektor (2) über einen Vertikalilluminator (3) an das optische Abbildungssystem (1) angeschlossen ist und die Lichtstrukturen vor der Frontlinse (18) in den Strahlengang (17) des optischen Abbildungssystems (1) eingekoppelt sind.

3. Messeinrichtung nach Anspruch 1 und 2, **dadurch gekennzeichnet, dass** die Lichtstrukturen hinter der Schaltwalze des optischen Abbildungsystems (1) in den Strahlengang (17) eingekoppelt sind und durch die Frontlinse (18) auf die Oberfläche eines Messobjektes (11) projiziert werden.

4. Messeinrichtung nach Anspruch 1 bis 3, **dadurch gekennzeichnet, dass** das optisch vergrößernde Abbildungssystem (1), an das die Aufnahmekameras (4; 5) über einen Strahlenteiler (6) angeschlossen sind, ein Stereomikroskop ist.

5. Messeinrichtung nach einem der Ansprüche 1 bis 4, **dadurch gekennzeichnet, dass** die Lichtstrukturen unterschiedliche Grey-Codes (19) sind, die zeitlich sequentiell über das Abbildungssystem (1) auf die Oberfläche des Messobjektes (11) projiziert werden.

6. Messeinrichtung nach einem der Ansprüche 1 bis 4, **dadurch gekennzeichnet, dass** die Lichtstrukturen Fotogrammetriemarken sind.

7. Messeinrichtung nach einem der Ansprüche 1 bis 3, **dadurch gekennzeichnet, dass** an die Frontlinse (18) des optischen Abbildungssystems (1) eine Winkelbeobachtungsoptik (8) mit einem an seiner Unterseite befindlichen, um 45° geneigten Spiegel (7) verdrehbar angeordnet ist.

8. Vorrichtung zur mikrofotogrammetrische 3D-Vermessung von Oberflächenstrukturen nach dem Triangulationsverfahren, bestehend aus einer Messeinrichtung nach den Ansprüche 1 bis 7 und einem Messobjekt (11), **dadurch gekennzeichnet, dass** die von dem Projektor (2) erzeugten Lichtstrukturen vertikal zur vermessenden Oberfläche in den Strahlengang (17) eines optischen Abbildungssystems (1) eingekoppelt sind.

9. Verfahren zur mikrofotogrammetrischen 3D-Vermessung von Oberflächenstrukturen nach dem Triangulationsverfahren, wobei mittels zweier Aufnahmekameras (4, 5) über ein optisch vergrößertes Abbildungssystem (1) zwei versetzte Bilder einer zu untersuchenden Oberfläche aufgenommen werden und daraus fotogrammetrisch ein Höhenbild berechnet wird, **dadurch gekennzeichnet, dass** das Verfahren folgende Schritte umfasst:
- Erzeugung einer strukturierten Beleuchtung über einen durch einen Mess- und Steuerrechner (10) ansteuerbaren digitalen Projektor (2),
- vertikale und zeitlich sequentielle Projektion der erzeugten Lichtstrukturen über eine Optik auf die zu vermessende Oberfläche,
- Aufnahme der Lichtstrukturen durch beide Aufnahmekameras (4, 5),
- Bestimmung von korrespondierenden Punkten auf der Oberfläche aus den aufgenommenen Lichtstrukturen.

## Claims

1. Microphotogrammetric 3D-measuring device for the measurement of surface structures according to the triangulation method comprising two recording cameras (4, 5), in a stationary arrangement according to the measuring method, and devices (1) with which the surface is imaged in an enlarged manner and a reference code is projected onto the surface, **characterised in that** a digital projector (2) for a structured lighting is incorporated in the beam path (17) of an optically enlarged imaging system (1), where said projector is controllable by a measurement and control computer (10) and whose generated light structures are timing-sequentially projectable onto the surface of the measuring object (11).

2. Measuring device according to Claim 1,
wherein,
the projector (2) is connected up to the optical imaging system (1) by way of a vertical illuminator (3), and the light structures before the front lens (18) are incorporated in the beam path (17) of the optical imaging system (1).

3. Measuring device according to Claims 1 and 2,
wherein,
the light structures behind the switch roll of the optical imaging system (1) are incorporated in the beam path (17) and are projected through the front lens (18) onto the surface of a measuring object (11).

4. Measuring device according to Claims 1 to 3,
wherein,
the optically enlarging imaging system (1), to which the recording cameras (4, 5) are connected by way of a beam divider (6), is a stereomicroscope.

5. Measuring device according to one of the Claims 1 to 4,
wherein,
the light structures are varying grey-codes (19) which are timing-sequentially projected by way of the imaging system (1) onto the surface of the measuring object (11).

6. Measuring device according to one of the Claims 1 to 4,
wherein,
the light structures are photogrammetry marks.

7. Measuring device according to one of the Claims 1 to 3,
wherein,
an angular observing optical system (8) with a mirror (7) on its underneath side having with a gradient of 45° is arranged in a rotating manner at the front lens (18) of the optical imaging system (1).

8. Device for the microphotogrammetric 3D-measurement of surface structures according to the triangulation method, comprising a measuring device according to the Claims 1 to 7 and a measuring object (11), **characterised in that** the lighting structures vertically to the surface to be measured and generated by the projector (2) are incorporated in the beam path (17) of a optical imaging system (1).

9. Method for the microphotogrammetric 3D-measurement of surface structures according to the triangulation method where, by means of two recording cameras (4, 5) by way of an optically enlarged imaging system (1), two offset photos of a surface to be examined are taken and from this a contour image is photogrammetrically calculated, **characterised in that** the method comprises the following steps:
-- generation of a structured lighting by way of a digital projector (2) which can be activated by means of a measuring and control computer (10),
-- vertical and timing-sequential projection of the generated light structures by way of an optical system onto the surface to be measured,
-- photo of the light structures by both recording cameras (4, 5),
-- determination of corresponding points on the surface from the recorded light structures.

## Revendications

1. Appareil de mesure 3D micro-photogrammétrique pour mesurer des structures de surface par la méthode de triangulation, constitué de deux caméras de prise de vue (4, 5) placées à poste fixe conformément à la méthode de mesure, et de moyens (1) par lesquels la surface est représentée agrandie et par lesquels un code de référence est projeté sur la surface,
**caractérisé en ce qu'**un projecteur numérique (2) permettant une illumination structurée et dirigeable par un calculateur de mesure et de commande (10), et dont les structures lumineuses produites sont projetables de façon chronologique-séquentielle sur la surface de l'objet de mesure (11), est couplé au trajet du rayon lumineux (17) d'un système de projection (1) qui apporte un agrandissement optique.

2. Appareil de mesure selon la revendication 1,
**caractérisé en ce que** le projecteur (2) est relié au système de projection optique (1) par l'intermédiaire d'un illuminateur vertical (3), et **en ce que** les structures lumineuses sont injectées dans le trajet du rayon lumineux (17) du système de projection optique (1), et cela devant la lentille frontale (18).

3. Appareil de mesure selon les revendications 1 et 2,
**caractérisé en ce que** les structures lumineuses sont injectées dans le trajet du rayon lumineux (17), et cela derrière le rouleau distributeur du système de projection optique (1), et projetées sur la surface d'un objet de mesure (11), à travers la lentille frontale (18).

4. Appareil de mesure selon les revendications 1 à 3,
**caractérisé en ce que** le système de projection (1) qui apporte un agrandissement optique et auquel sont reliées par l'intermédiaire d'un séparateur de faisceau (6) les caméras de prise de vue (4; 5) est un stéréomicroscope.

5. Appareil de mesure selon l'une des revendications 1 à 4,
**caractérisé en ce que** les structures lumineuses sont des codes de Grey (19) différents étant projetés de façon chronologique-séquentielle sur la surface de l'objet de mesure (11), par l'intermédiaire du système de projection (1).

6. Appareil de mesure selon l'une des revendications 1 à 4,
**caractérisé en ce que** les structures lumineuses sont des répères photogrammétriques.

7. Appareil de mesure selon l'une des revendications 1 à 3,
**caractérisé en ce qu'**une optique permettant l'observation angulaire (8), et pourvue d'un miroir incliné de 45° (7) lequel se trouve au dessous du système de projection optique (1), est fixée à la lentille frontale (18) dudit système de projection optique de telle sorte qu'il peut pivoter.

8. Dispositif de mesure 3D micro-photogrammétrique pour mesurer des structures de surface par la méthode de triangulation, constitué d'un appareil de mesure selon les revendications 1 à 7 et d'un objet de mesure (11),
**caractérisé en ce que** les structures lumineuses produites par le projecteur (2) sont couplées verticalement à la surface à mesurer au trajet du rayon lumineux (17) d'un système de projection optique (1).

9. Procédé de mesure 3D micro-photogrammétrique pour mesurer des structures de surface par la méthode de triangulation, dans lequel deux images décalées d'une surface à étudier sont enregistrées au moyen de deux caméras de prise de vue (4, 5), par l'intermédiaire d'un système de projection (1) qui apporte un agrandissement optique, et dans lequel en est calculé une image d'altitude par méthode photogrammétrique,
**caractérisé en ce que** ledit procédé comprend les étapes suivantes:
- production d'illumination structurée par l'intermédiaire d'un projecteur numérique (2) dirigeable par un calculateur de mesure et de commande (10),
- projection verticale et chronologique-séquentielle des structures lumineuses produites sur la surface à mesurer, par l'intermédiaire d'une optique,
- enregistrement des structures lumineuses par les deux caméras de prise de vue (4, 5),
- détermination de points correspondants sur la surface à partir des structures lumineuses enregistrées.
